# EUROPEAN PATENT APPLICATION

(11) **EP 4 191 201 A1**
(43) Date of publication of application: **07.06.2023**
(21) Application number: 22207273.8
(22) Date of filing: 14.11.2022
(51) Int. Cl.: G01C 15/00

(54) **SURVEYING METHOD, SURVEYING SYSTEM, AND SURVEYING PROGRAM**

(30) Priority: 15.11.2021 JP 2021186003
(71) Applicant: TOPCON CORPORATION, Tokyo 174-8580 (JP)
(72) Inventor: SATO, Kohei, Tokyo, 174-8580 (JP); NISHI, Yoshihiro, Tokyo, 174-8580 (JP); MIYAJIMA, Motohiro, Tokyo, 174-8580 (JP); TANAKA, Takashi, Tokyo, 174-8580 (JP)
(74) Representative: Schmitt-Nilson Schraud Waibel Wohlfrom Patentanwälte Partnerschaft mbB

(57) **Abstract**

A surveying method using a surveying system including a surveying device and a terminal. The surveying method includes: receiving, by the terminal, a result of selecting a survey target foundation point from among a plurality of consecutive foundation points; obtaining an intersection between a reference line and a boundary side set in advance, the reference line connecting the survey target foundation point and an adjacent foundation point adjacent to the survey target foundation point; and outputting, in association with the survey target foundation point, a relative positional relationship between the intersection and a survey target device surveyed by the surveying device for the survey target foundation point.

## Description

### BACKGROUND

The present disclosure relates to a surveying method, a surveying system, and a surveying program.

"Batter boards" are set to determine the positions of columns and walls before the start of construction. Batter boards are temporary frameworks prepared by placing stakes and beams at necessary points prior to foundation construction in order to set the horizontal lines or other indicators of the foundations of concrete or other buildings. After setting up the batter boards, for example, marking of foundation points based on design information is performed, in foundation construction of a building. For example, Japanese Patent No. 3784763 discloses such a technique that light emitters are placed at candidate points assumed to be true marking points, light emitted from the light emitters at the candidate points is detected using transits, and deviations between detected values of the candidate points and values of the marking point are calculated out as a difference in latitude and longitude.

### SUMMARY

It is required that a building be constructed with a margin of a predetermined distance from a land boundary. Sometimes an actual land boundary at a construction site would be inconsistent with, for example, design information obtained in advance by a contractor, so that the distance between the building and the boundary would be different from the design information. There would thus be a case that requires checking whether the positional relationship (e.g., the distance) between the marking point and the boundary is appropriate at the stage of foundation construction. For example, according to Japanese Patent No. 3784763 described above, a light emitter placed at a point assumed as a marking point to be surveyed is detected by transits with reference to two benchmarks on boundary lines. However, obtaining the relative positional relationship between a reference line drawn by connecting marking points and a boundary line is not easy.

One aspect of the present disclosure was achieved in view of the above. It is an object of the present disclosure to provide a surveying method, a surveying system, and a surveying program that allow an operator to efficiently acquire a position at a site.

In order to achieve the object, a surveying method according to the present disclosure uses a surveying system including a surveying device and a terminal, the surveying method including: receiving, by the terminal, a result of selecting a survey target foundation point from among a plurality of consecutive foundation points; obtaining an intersection between a reference line and a boundary side set in advance, the reference line connecting the survey target foundation point and an adjacent foundation point adjacent to the survey target foundation point; and outputting, in association with the survey target foundation point, a relative positional relationship between the intersection and a survey target device surveyed by the surveying device for the survey target foundation point.

In order to achieve the object, a surveying system according to the present disclosure includes a surveying device and a terminal, the terminal including: an input unit configured to receive a result of selecting a survey target foundation point from among a plurality of consecutive foundation points; a control unit configured to obtain an intersection between a reference line and a boundary side set in advance, the reference line connecting the survey target foundation point and an adjacent foundation point adjacent to the survey target foundation point; and outputting, in association with the survey target foundation point, a relative positional relationship between the intersection and a survey target device surveyed by the surveying device for the survey target foundation point.

In order to achieve the object, a surveying program according to the present disclosure uses a surveying system including a surveying device and a terminal, the surveying program causing a computer to execute: receiving, by the terminal, a result of selecting a survey target foundation point from among a plurality of consecutive foundation points using the terminal; obtaining an intersection between a reference line and a boundary side set in advance, the reference line connecting the survey target foundation point and an adjacent foundation point adjacent to the survey target foundation point; and outputting, in association with the survey target foundation point, a relative positional relationship between the intersection and a survey target device surveyed by the surveying device for the survey target foundation point.

The surveying method, the surveying system, and the surveying program according to the present disclosure allow an operator to efficiently acquire a position at a site.

### BRIEF DESCRIPTION OF THE DRAWINGS

FIG. 1 illustrates an example construction site with batter boards.
FIG. 2 is a configuration diagram of a surveying system according to an embodiment of the present disclosure.
FIG. 3 is a configuration diagram of design information.
FIG. 4 is a configuration diagram of surveying information.
FIG. 5 is a flowchart showing a process of measuring a relative position of a foundation point.
FIG. 6 shows an example screen for measuring the relative position of the foundation point.
FIG. 7 illustrates the relationship between a batter board stake and the altitude of a benchmark.

### DETAILED DESCRIPTION

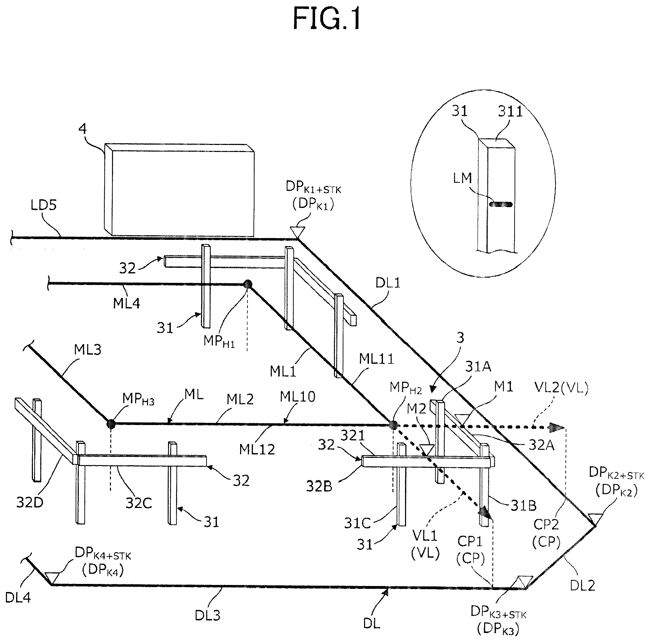

An embodiment of the present disclosure will be described below with reference to the drawings. FIG. 1 illustrates an example construction site with batter boards 3. "Batter boards" are for determining the positions of columns and walls before the start of construction and are temporary frameworks prepared by placing stakes and beams at necessary points prior to foundation construction in order to set the horizontal lines or other indicators for the foundations of buildings, which are made from concrete or the like. A series of operations using the batter boards 3 is also referred to as "setting batter boards". The batter boards 3 become unnecessary after setting marks, such as reference marks, on an immovable object as a reference, and are eventually removed. For example, the batter boards 3 are corner batter boards arranged in a substantially L-shape in a plan view. For example, a batter board 3 at a foundation point MP_{H2} in FIG. 1 includes batter board stakes 31A, 31B, and 31C (collectively 31) and batter board beams 32 and 32A and 32B (collectively 32). Such corner batter boards are placed at four corners of a building, in the case where the building is rectangular. Across the facing corner batter boards, leveling strings (not shown) are stretched out. In the present disclosure, the batter board stakes 31A to 31C have the same functions and are collectively referred to as the "batter board stakes 31" without distinction. Similarly, the batter board beams 32 and 32A to 32D are also collectively referred to as "batter board beams 32 and 32."

The batter board stakes 31 are stakes driven into the ground for setting a batter board 3, and may be referred to as *Mizukui* or *Kentokui* in Japanese. Each batter board stake 31 is provided with a mark LM drawn thereon, the mark LM indicating the position of a beam top 321 (the upper end of a batter board beam 32). This mark LM is also referred to as a "horizontal mark." The mark LM indicates the altitude of the foundation of the building. The batter board beam 32 is a horizontal plate, which is placed with its upper end aligned with the mark LM on the batter board stake 31 so as to indicate the altitude of the foundation.

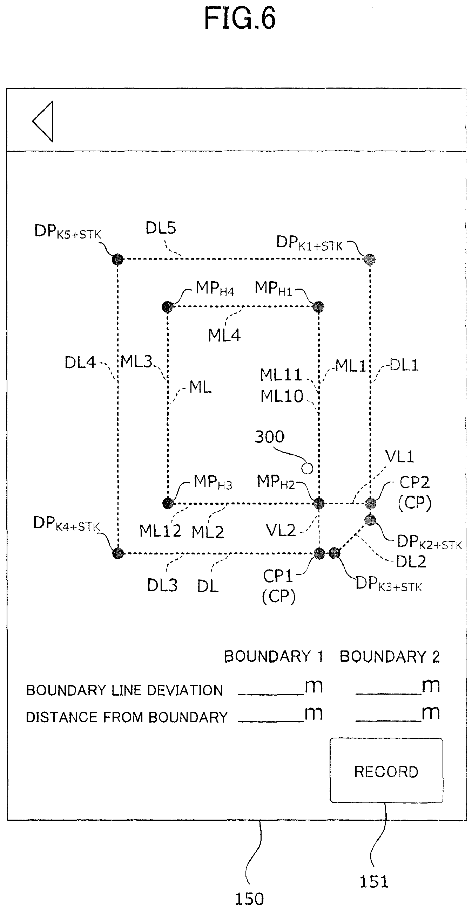

Inside the batter boards 3, the leveling strings (not shown) are horizontally stretched across the batter board beams 32 and 32 facing with each other, so that the leveling strings are provided along reference lines ML11 and ML12 (collectively ML10). The reference line ML11 includes a reference side ML1 and an extension (e.g., an imaginary extension VL1) of the reference side ML1, while the reference line ML12 includes a reference side ML2 and an extension (e.g., an imaginary extension VL2) of the reference side ML2. The leveling strings may be nylon or polyethylene strings or piano wires. The leveling strings indicate a height which is the altitude of the building foundation. Reference sides ML1 to ML4 shown in FIG. 1 are imaginary lines indicating the positions at which the leveling strings need to stretch as design information 121 set in advance. The reference sides ML1 to ML4 are worked out to connect foundation points MP_{H1} to MP_{H4} (see also FIG. 6) given as the design in formation 121. These foundation points MP_{H1} to MP_{H4} can be start points or end points of the reference sides ML1 to ML4.

The leveling strings are stretched out across the facing batter board beams 32 and 32 by being fixed to fixing points on the batter board beams 32 and 32 by nailing or any other suitable means. For example, a leveling string is stretched out between the batter board beam 32A and the batter board beam 32D facing thereto. The leveling strings stretched substantially horizontally are at substantially the same height as the marks LM.

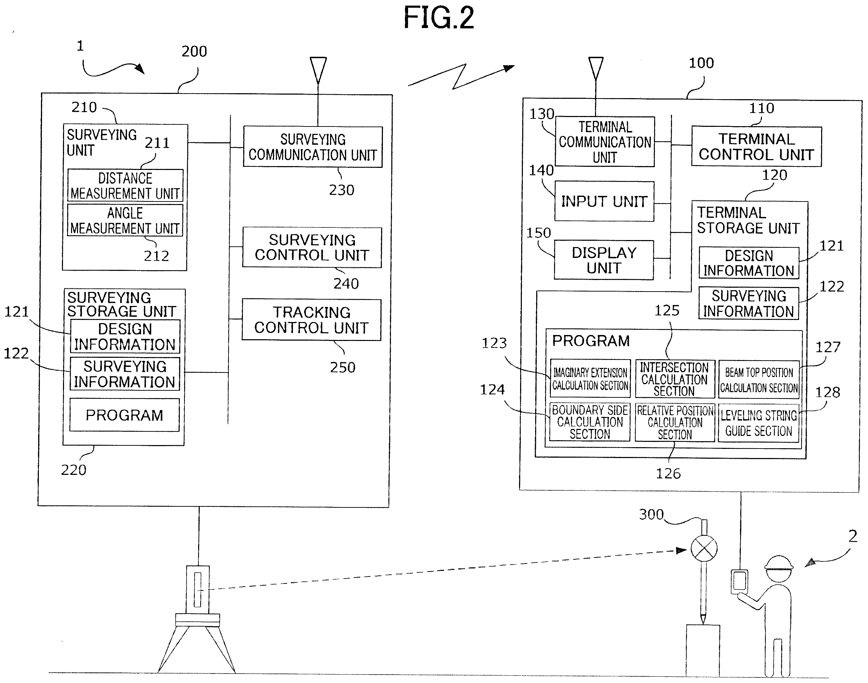

FIG. 2 is a configuration diagram of a surveying system 1 according to the embodiment of the present disclosure. The surveying system 1 includes a surveying device 200. a terminal 100, and a survey target device 300.

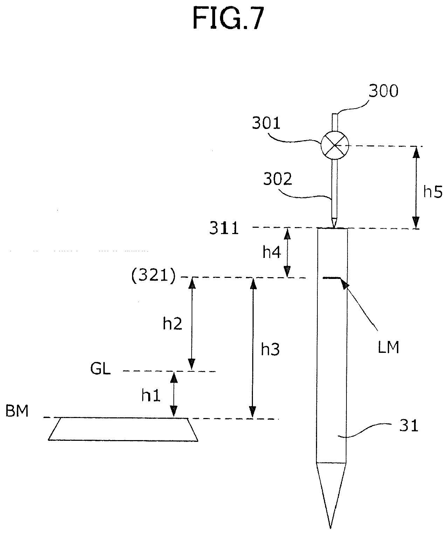

The surveying device 200 is a surveying instrument of a total station (TS)-equivalent light wave type on known coordinates, for example. Examples of the "TS-equivalent light wave type" include, in addition to the TS, non-telescopic light wave-based measurement instruments capable of performing measurement equivalent to that is performed by the TS equipped with an automatic tracking function. The surveying device 200 can automatically track the survey target device 300 as a survey target, so that, by tracking the survey target device 300, the surveying device 200 can survey a desired point at a construction site at which the survey target device 300 is placed. The survey target device 300 includes an optical element that reflects light radiated from the surveying device 200 back to the surveying device 200. This optical element is what is called a "retroreflective prism" 301 (see also FIG. 7) with retroreflective properties. The survey target device 300 may be a surveying pole, which is a pole 302 with a known length and with the retroreflective prism 301 provided thereon.

The surveying device 200 includes a horizontal rotation driving unit and a telescope unit on the horizontal rotation driving unit with a vertical rotation driving unit interposed therebetween. The horizontal rotation driving unit is supported by a tripod and drives horizontal rotation. The vertical rotation drive unit is vertically rotatable. The surveying device 200 includes an angle measurement unit 212a including horizontal angle detector and a vertical angle detector (the details are not shown). The horizontal angle detector detects the horizontal rotation angle, whereas the vertical angle detector detects the vertical rotation angle. With these horizontal and vertical angle detectors, the surveying device 200 can measure the horizontal and vertical angles of the collimation direction, respectively.

The surveying device 200 further includes a distance measurement unit 211 that measures a slope distance to the survey target device 300. The distance measurement unit 211 may be an electro-optical distance meter, for example. For the sake of convenience, these angle and distance measurement units 212 and 211 are collectively referred to as a "surveying unit 210."

The surveying device 200 includes the surveying unit 210, a surveying storage unit 220, a surveying communication unit 230, a surveying control unit 240, and a tracking control unit 250.

The surveying storage unit 220 stores, in advance, various programs for the surveying, tracking, or other controls; or information (e.g., the altitude) on the ground, design information 121, or other information, which are used at a construction site or the like. The surveying storage unit 220 also stores surveying information 122. The surveying device 200 includes a computer for executing programs.

The surveying communication unit 230 has a function capable of communicating with external devices, such as the terminal 100, and may be any suitable wireless or wired communication means, for example.

The surveying control unit 240 controls the functions, such as surveying, of the surveying device 200. More specifically, the surveying control unit 240 automatically or manually collimates the survey target device 300. The surveying control unit 240 detects the horizontal angle, the vertical angle, and the slope distance between the surveying device 200 and the survey target device 300 using the angle measurement unit (i.e., the horizontal and vertical angle detectors) 212 and the distance measurement unit 211 described above. If the survey target device 300 is a surveying pole including a pole 320 and a retroreflective prism 301, the distance from the retroreflective prism 310 to the distal end (i.e., upper or lower end) of the pole 320 is known in advance. Accordingly, the surveying control unit 240 can correct the surveyed position of the retroreflective prism 301 determined by the angle measurement unit 212 and the distance measurement unit 211 to calculate out the position of the distal end (i.e., upper or lower end) of the pole 320 as a result of surveying.

The tracking control unit 250 controls a tracking unit including a light source and is configured to control the drive of the horizontal and vertical rotation driving units in such a way that tracking light emitted from the tracking unit and then reflected from the survey target device 300 is continuously received by the tracking unit, thereby causing the surveying device (telescope unit) 200 to track the survey target device 300.

The terminal (terminal device) 100 may be, for example, a smartphone, a feature phone, a tablet, a handheld computer device (e.g., a personal digital assistant (PDA)), a wearable terminal (e.g., a glasses-type device, a watch-type device), or any other suitable device. As an alternative, the terminal 100 can be implemented by installing application software in a general-purpose device. The terminal 100 may be, for example, a portable terminal easily carriable at a work site. Therefore, it is easy for an operator to view a display unit 150, carrying the terminal 100 in a hands-free way or carrying the terminal 100 in one hand.

The terminal 100 includes a terminal control unit 110, a terminal storage unit 120, a terminal communication unit 130, an input unit 140, and the display unit 150.

Although not shown, the terminal control unit 110 executes functions and/or methods implementable by codes or commands included in programs stored in the terminal storage unit 120. The terminal 100 includes a computer for executing the programs. Examples of the terminal control unit 110 include a central processing unit (CPU), a microprocessor unit (MPU), a graphics processing unit (GPU), a microprocessor, a processor core, a multiprocessor, an application specific integrated circuit (ASIC), and a field-programmable gate array (FPGA), and the like. The terminal control unit 110 may include a logic circuit or a dedicated circuit formed in an integrated circuit, for example, to execute the processing disclosed in the embodiment. These circuits may be one or more integrated circuits. A single integrated circuit may execute plural steps of the processing described in the embodiment. The terminal control unit 110 may also include a main storage unit that temporarily stores therein a program read out from the terminal storage unit 120 and provides a workspace for the program.

The terminal communication unit 130 has a function capable of communicating with the surveying communication unit 230 of the surveying device 200. The terminal communication unit 130 is capable of receiving, for example, a surveying result obtained by surveying the survey target device 300 by the surveying device 200 or positional information (a horizontal angle, a vertical angle, and a slope distance to the pole end) calculated by the surveying control unit 240. The calculation of the positional information according to the surveying results may be performed by the surveying device 200 or by the terminal 100. The communications between the surveying device 200 and the terminal 100 may be established by wire or wirelessly. Any communication protocol may be used to establish the communications between the surveying device 200 and the terminal 100, as long as mutual communications can be established therebetween.

The input unit 140 may have any suitable configuration capable of receiving inputs from an operator 2 who is the user of the device 100 and transmitting information related to the inputs to the terminal control unit 110. Examples of the input unit 140 include, in addition to a hardware input means such as buttons, a software input means displayed on the display unit 150, such as a touch panel, a remote controller, or an audio input means such as a microphone.

The display unit 150 may have any suitable configuration capable of displaying images (screens). Examples of the display unit 150 include a flat display such as a liquid crystal display or an organic light-emitting diode (OLED) display, a curved display, a folding screen on a foldable terminal, a head-mounted display, and a device displayable through projection (including aerial projection) on an object using a small projector.

The terminal storage unit 120 has a function of storing various necessary programs (e.g., a surveying program, which will be described later) or various data. In addition, the terminal storage unit 120 can store therein the surveying information 122 received by the terminal communication unit 130 and the positional information calculated based on the surveying information 122. The terminal storage unit 120 can store therein information (e.g., the altitude) on the ground for the construction etc., design information 121, or any other suitable information. The terminal storage unit 120 may be a storage medium, such as a hard disk drive (HDD), a solid-state drive (SSD), or a flash memory.

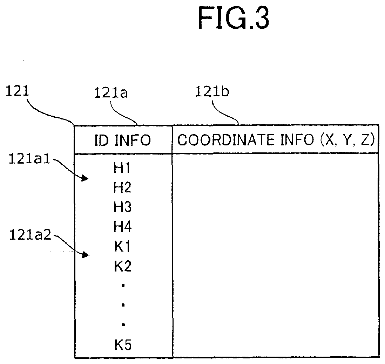

The design information 121 includes design drawings necessary for construction works, for example. Examples of the construction works include constructions of structures such as buildings, roads, railroads, tunnels, bridges, ditches, waterways, and rivers. The terminal storage unit 120 according to this embodiment includes, as the design information 121, data on a plurality of foundation points MP_{H1} to MP_{H4} and a plurality of boundary points DP_{K1} to DP_{K5} (here, the suffixes of MP and DP indicate identification information 121a and 122a on foundation points MP and the boundary points DP) in such a way that identification information 121a, coordinate information 121b, and other information are stored in association with each other (see FIG. 3).

FIG. 3 is a configuration diagram of the design information 121. The design information 121 includes the identification information 121a and the coordinate information 121b on the foundation points MP and/or the boundary points DP stored in association with each other. The identification information 121a includes foundation point identification information 121al associated with the foundation points MP and boundary point identification information 121a2 associated with the boundary points DP. In this embodiment, the foundation point identification information 121a1 and the boundary point identification information 121a2 are each composed of an alphabet and a number. For example, the numbers of the foundation point identification information 121a1 are assigned as serial numbers along reference sides ML. On the other hand, the numbers of the boundary point identification information 121a2 are also assigned as serial numbers along boundary sides DL. That is, identification numbers are assigned to the plurality of foundation points MP and boundary points DP in a sequential order. The design information 121 may include information other than the information illustrated in FIG. 3.

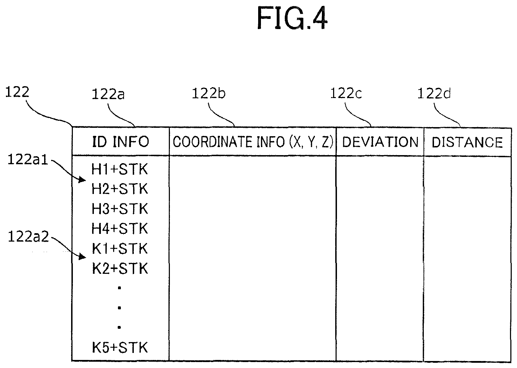

FIG. 4 is a configuration diagram of the surveying information 122. The surveying information 122 includes the identification information 122a assigned to the results of surveying the foundation points MP or the boundary points DP, coordinate information 122b, a deviation 122c, and a distance 122d stored in association with each other. The identification information 122a includes foundation point identification information 122a1 associated with the foundation points MP and boundary point identification information 122a2 associated with the boundary points DP. The foundation point identification information 122a1 and the boundary point identification information 122a2 are set in association with the foundation point identification information 121al and the boundary point identification information 121a2 of the design information 121. In this embodiment, a suffix "+STK" is added to the foundation point identification information 121a1 and the boundary point identification information 121a2 With respect to the results of surveying, the identification numbers are assigned to the plurality of foundation points MP and boundary points DP in a sequential order. The surveying information 122 may also include information other than the information shown in FIG. 4.

The terminal storage unit 120 stores therein, as application software programs, an imaginary extension calculation section 123, a boundary side calculation section 124, an intersection calculation section 125, a relative position calculation section 126, a beam top position calculation section 127, a leveling string guide section 128, and other sections that fulfill various functions.

The imaginary extension calculation section 123 has a function of calculating an imaginary extension VL which is an extension of a reference side (i.e., a foundation reference side) ML indicating where a leveling string is to be stretched out. The boundary side calculation section 124 has a function of calculating the boundary sides (boundary reference sides) DL indicating the boundary lines of a site based on the boundary points DP. The intersection calculation section 125 has a function of calculating intersections (e.g., intersections CP1 and CP2) between the boundary sides DL and the imaginary extensions VL. The relative position calculation section 126 has a function of calculating a relative positional relationship between the surveyed position of the survey target device 300 and the intersection on the boundary side corresponding to the selected survey target foundation point, and a relative positional relationship between the surveyed position and the selected foundation point MP (survey target foundation point).

The beam top position calculation section 127 has a function of calculating a difference in height from the stake top 311 of a batter board stake 31 to a reference height of a foundation (i.e., the beam top 321, which will be described later with reference to FIG. 7) stored in advance and displaying the difference on the display unit 150. The calculation is performed based on the reference height of the foundation, the altitude of a benchmark BM measured by the surveying device 200, and the altitude of the stake top 311 of the batter board stake 31. The leveling string guide section 128 has a function of causing the terminal 100 to display, at the time of stretching a leveling string, the distances between the coordinates of the survey target foundation point (e.g., the coordinate information 121b of the design information 121) and the surveyed position of the survey target device 300 corresponding to the survey target foundation point.

### (Relative Position Measurement Function)

Now, an outline of a relative position measurement function will be described, which is one aspect of the surveying method, the surveying system, and the surveying program according to one embodiment of the present disclosure.

According to laws, the foundation of a building needs to be constructed at a certain distance from a boundary line of a site. It is thus preferable to check the distance from a foundation point MP through which a leveling string stretches to the site boundary line (e.g., a boundary side DL) before setting a batter board 3, for example. However, it is not easy to measure the boundary-based distance, which is the distance to the site boundary line, while grasping the foundation point MP. A boundary side DL1 shown in FIG. 1 is a side connecting the boundary point DP_{K1} and the boundary point DP_{K2}. An off-site structure 4, such as a wall, may be present outside the boundary side DL1. The relative positional relationship in interest to be found out here is, for example, the boundary-based distance between the foundation point MP_{H2} and the boundary side DL1 on the X-Y coordinate plane (i.e., the coordinates on the horizontal plane). In order to measure the distance, the surveying system 1 calculates out an imaginary extension VL passing through a survey target foundation point selected from among the foundation points MP, and calculates out an intersection CP between the imaginary extension VL and a boundary side DL. The display unit 150 of the terminal 100 displays, for example in real time, a relative distance between the survey target device 300 and an intersection CP2 and a relative distance between the survey target device 300 and the foundation point MP_{H2}. Accordingly, the operator can easily move the survey target device 300 toward the survey target foundation point, via checking the display unit 150.

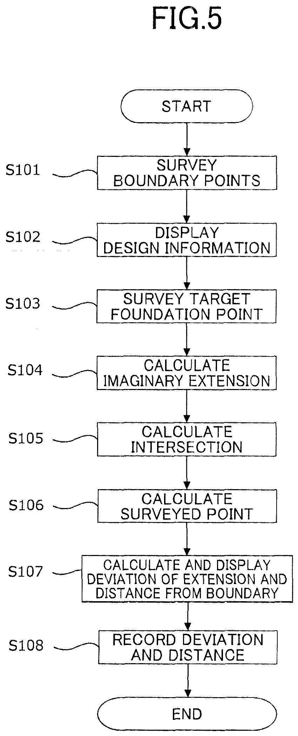

In the following, the steps of measuring the relative positional relationship between a reference side (specifically, a foundation point MP) and the survey target device 300 or the site boundary line will be described. FIG. 5 is a flowchart illustrating the flow of processing in a surveying method and a surveying program using the surveying system 1 according to this embodiment. FIG. 6 shows an example screen for measuring relative positions of foundation points.

First, in step S101, an operator places the surveying device 200 at a site, thereby setting the device point of the surveying device 200. The surveying device 200 surveys boundary points DP (e.g., boundary points DP_{K1} to DP_{K5}) on the land boundary. The surveying control unit 240 records the coordinates (i.e., the X-, Y-, and Z-coordinates) of the surveyed boundary points DP in the surveying storage unit 220 as the surveying information 122 in such a way that the boundary point identification information 122a2 is associated with the coordinate information 122b. Thereafter, the surveying device 200 records the surveying information 122 in the terminal storage unit 120 of the terminal 100 via the surveying communication unit 230 and the terminal communication unit 130. Therefore, the boundary sides DL1 to DL5 displayed on the display unit 150 in step S102 are set in advance through surveying performed by the surveying device 200.

In step S102, the terminal control unit 110 reads out the design information 121 and the surveying information 122 from the terminal storage unit 120, and displays positional information including the foundation points MP and the boundary points DP on the display unit 150. In FIG. 6, the foundation points MP_{H1} to MP_{H4} and the boundary points DP_{K1 + STK} to DP_{K5 + STK} surrounding the foundation points MP_{H1} to MP_{H4} are displayed. Here, the positional information on the foundation points MP and the boundary points DP are displayed with the icons and points represented by black circles.

In step S103, the operator selects one of the foundation points MP_{H1} to MP_{H4} displayed on the display unit 150, using the input unit 140. The terminal control unit 110 receives, as a survey target foundation point, the one (e.g., the foundation point MP_{H2}) selected from among the plurality of consecutive foundation points MP_{H1} to MP_{H4}. The survey target foundation point can be selected by the operator via an icon or a figure, which is visual information displayed on the display unit 150. As internal processing, the terminal control unit 110 receives the input of an instruction via the input unit 140 as indicating that the piece of foundation point identification information 121a1 associated with the selected survey target foundation point is selected.

In step S104, the terminal control unit 110 determines, as an adjacent foundation point, a foundation point (e.g., the foundation point MP_{H1} or MP_{H3} adjacent to the foundation point MP_{H2}) that is of a piece of foundation point identification information 121a1 assigned prior to or subsequent to the foundation point identification information 121a1 of the selected survey target foundation point (e.g., the foundation point identification information 121a1 "H2" on the selected foundation points MP_{H2}).

The terminal control unit 110 also determines reference lines ML10 connecting the survey target foundation point and either one of the adjacent foundation points adjacent to the survey target foundation point. The reference line ML10 includes first and second reference lines (reference lines ML11 and ML12). The reference line ML11 connects a survey target foundation point (e.g., the foundation point MP_{H2}) and a first adjacent foundation point (e.g., the foundation point MP_{H1}) that is one of adjacent foundation points adjacent to this survey target foundation point. The reference line ML12 connects the survey target foundation point and a second adjacent foundation point (e.g., the foundation point MP_{H3}) that is another one of the adjacent foundation points adjacent to this survey target foundation point. The reference lines ML11 and ML12 extend in two different directions. In addition, each of the reference lines ML11 and ML12 (collectively ML10) includes a reference side ML1 or ML2 (collectively ML) on which a foundation or the like of a structure is to be constructed, and an imaginary extension VL1 or VL2 (collectively VL) which is the extension of the reference side ML1 or ML2.

In step S105, the terminal control unit 110 obtains the intersection CP between a reference line ML10 and a boundary side DL set in advance. The reference line ML10 connects a survey target foundation point and an adjacent foundation point adjacent to the survey target foundation point. First, the terminal control unit 110 determines the boundary sides DL1 to DL5, where the boundary sides DL1 to DL5 are formed by connecting, in a circulative order of the boundary point identification information 122a2, a plurality of boundary points DP_{K1 + STK}, DP_{K2 + STK}, DP_{K3 + STK}, DP_{K4 + STK}, and DP_{K5 + STK}, connecting the boundary point DP_{K5 + STK} to the boundary point DP_{K1 + STK}, where the plurality of boundary points DP_{K1 + STK} to the boundary point DP_{K5 + STK} are assigned with the boundary point identification information 122a2 in a sequential order. That is, the boundary sides DL1 to DL5 are worked out based on the actually surveyed boundary points DP_{K1 + STK} to DP_{K5 + STK}. Moreover, the intersections between reference lines and reference sides include the intersection (i.e., the first intersection) CP1 between the reference line (i.e., the first reference line) ML11 and the boundary side DL3 and the intersection (i.e., the second intersection) CP2 between the reference line (i.c., the second reference line) ML12 and the boundary side DL1 in accordance with the direction of the reference line. The obtained intersections CP1 and CP2 are displayed on the display unit 150.

In step S105, the display unit 150 may display reference sides ML formed, as surrounding lines, by sequentially connecting the foundation points MP. The foundation point MP_{H1} corresponding to the start point of the connecting in the foundation point identification information 121a1, via the reference side ML4, to the foundation point MP_{H4} corresponding to the end point of the connecting in the foundation point identification information 121a1 (i.e., the foundation point MP with the largest of the serial numbers according to the foundation point identification information 121a1). The display unit 150 may display a boundary side DL sequentially connecting the foundation points MP as the surrounding lines. The terminal control unit 110 may or may not display the obtained boundary sides DL1 to DL5 on the display unit 150.

In step S106, the terminal control unit 110 works out the position of the survey target foundation point. The survey target foundation point is worked out, for example, via surveying performed with the surveying device 200 surveying the survey target device 300, which is actually held by the operator.

In step S107, the terminal control unit 110 calculates out the relative positional relationship between the intersection CP and the position of the survey target device 300 surveyed by the surveying device 200 for the survey target foundation point, and displays the relative positional relationship on the display unit 150. The relative positional relationship includes a "distance" (also referred to as a "boundary-based distance" or "foundation-based distance") from the intersection CP1 to the position of the survey target device 300. In addition, the relative positional relationship includes a "deviation" which is the position of the survey target device 300 away from each reference line ML10. For example, the terminal control unit 110 displays, on the display unit 150, the distances from either the intersections CP1 or CP2 to the position of the survey target device 300 and the deviation, which is the position of the survey target device 300 with respect to the reference line.

The display unit 150 in FIG. 6 shows "boundary line deviation" for the respective "boundary 1" and "boundary 2". The "boundary line deviation" is a relative position with respect to a reference line substantially parallel to a boundary side. For example, "boundary 1" shows a deviation with respect to the reference line ML11, while "boundary 2" shows a deviation with respect to the reference line ML12. The deviation can be, for example, a vertical distance from a point in interest to the reference line ML11 or ML12. The display unit 150 also displays "distance from boundary" including a distance to the "boundary 1" (e.g., the boundary side DL1) and a distance to the "boundary 2" (e.g., the boundary side DL2). Examples of the distance include, for example, a distance from a point in interest to the intersection CP2 on the boundary side DL1 and a distance from the point in interest to the intersection CP1 on the boundary side DL3.

In step S108, once an operator selects a "RECORD" button 151 displayed on the display unit 150, the terminal control unit 110 receives this record instruction and records, in the terminal storage unit 120, the currently calculated and displayed deviation and distance information as the deviation 122c and a distance 122d according to the surveying information 122 (see FIG. 4). The terminal control unit 110 also records, in the terminal storage unit 120, the coordinate information on the survey target device 300 obtained in step S106 as the coordinate information 122b of the surveying information 122 in association with the deviation 122c and the distance 122d.

With the use of such a surveying system 1, the operator can measure the coordinates of each foundation point MP according to single design information 121 to obtain the deviation and the distance regarding each foundation point MP. For example, the operator measures the coordinates of each foundation point MP to obtain a relative position (e.g., deviation and distance) with respect to a boundary side. If the distance does not meet predetermined conditions (e.g., less than a distance compulsorily required by laws), the operator can use the surveying method to reconsider the positions (i.e., the coordinate information) 121b of the foundation points MP in the design information 121. The terminal 100 may be so configured that the terminal storage unit 120 stores therein thresholds of distances in advance, and if a distance calculated fails to meet predetermined conditions at pressing of the RECORD button 151 by an operator, the terminal 100 outputs an alert in the form of sound, display, or the like and does not record the calculated relative position or the surveying information. The terminal 100 may be so configured that, if the boundary points DP have not yet surveyed (e.g., the data corresponding to the boundary points DP is missing in the surveying information 122) when an operator selects the RECORD button 151, the terminal 100 outputs an alert in the form of sound, display, or the like and prompts to survey the boundary points DP.

The surveying method according to the embodiment of the present disclosure allows an operator to acquire a relative positional relationship between the position of the survey target device 300 and an intersection CP corresponding to a survey target foundation point by selecting the survey target foundation point from among consecutive foundation points MP as the survey target foundation point via the input unit 140. This configuration allows the operator to specify the relative position easily and efficiently.

By displaying image information and other necessary information as described above on the display unit 150, the terminal 100 informs an operator of deviations with respect to an intersection (deviations respectively from the reference lines ML 11 and ML12). Based on such information, the operator can easily perform surveying to find out a position corresponding to the survey target foundation point by searching for a position distanced from the intersection CP by a smaller distance or (by zero distance).

### (Batter Board Setting Function)

Now, an outline of a batter board setting function will be described, which is one aspect of the surveying method, the surveying system, and the surveying program according to an embodiment of the present disclosure.

As shown in FIG. 1, the batter board 3 includes a plurality of batter board stakes 31 each with a mark LM indicating the position of the corresponding beam top 321. The altitude indicated by the marks LM is basically common among all the batter board stakes 31. However, since the lengths of the stakes to be used and the depths of the stakes driven by manual work vary, the work of applying the marks LM to a common altitude is not easy.

A procedure for applying the marks LM to such batter board stakes 31 evenly and accurately will be described herein. FIG. 7 illustrates the relationship between a batter board stake 31 and the altitude of a benchmark BM. In FIG. 7, the vertical direction of the drawing represents the height direction of the batter board stake 31. Here, the length of the batter board stake 31 driven in the ground and the height of the stake top 311 are unknown. The position (including altitude) of the benchmark BM at the site is known and included in the design information, or can be measured at a site. In addition, the altitude difference from the benchmark BM to a current ground GL and the altitude difference from the ground GL to the beam top 321 are known and included in the design information 121.

The operator measures the altitude of the stake top 311 using the surveying device 200 and the survey target device 300. The altitude of the stake top 311 can be obtained by measuring the altitude of the retroreflective prism 301 as a target and calculating out the altitude of the stake top 311 on the basis of a known height h5 of sight-line from the retroreflective prism 301 to a distal end of the pole 302 (e.g., the lower end thereof in the example of FIG. 7). Once the altitude of the stake top 311 of the survey target device 300 is found out by the measurement, it becomes possible to calculate out an altitude difference h4 from the stake top 311 to the beam top 321 using the information on a known altitude difference h1, h2. or h3, where the altitude difference h1 is an altitude difference between the benchmark BM to the ground GL, the altitude difference h2 is an altitude difference between the ground GL and the beam top 321, and the altitude difference h3 is an altitude difference between the benchmark BM and the beam top 321. The terminal 100 can display the calculated altitude difference h4 on the display unit 150.

An exemplary surveying method using the surveying system 1 may be a surveying method of setting a batter board 3 including a batter board stake 31, a batter board beam 32, and a leveling string. The surveying method includes, for example: performing benchmark measurement including measuring, with the surveying device 200, the altitude of a benchmark BM, which serves as a reference height of the batter board 3; performing stake top measurement including measuring the altitude of a stake top 311 of a batter board stake 31 installed; and performing beam top position display including calculating a difference in height between the stake top 311 of the batter board stake 31 and a reference height of a foundation (i.e., the ground GL) stored in advance based on the reference height of the foundation, the altitude of the benchmark BM, and the altitude of the stake top 311 of the batter board stake 31, and displaying the beam top position on the terminal 100. Accordingly, even if the driven stakes are installed with various lengths and depths, marks LM indicating the positions of the beam tops 321 of the plurality of batter board stakes 31 can be placed accurately, so that the batter board beams 32 and 32 of the batter board 3 can be set efficiently. This configuration allows an operator to even solely measure a stake top 311 with the survey target device 300 and the terminal 100 in a hand and easily make a mark LM via checking, on site, the altitude difference h4 from the stake top 311 to the beam top 321 on the display unit 150 of the terminal 100.

### (Leveling String Setting Function)

Now, an outline of a leveling string setting function will be described, which is one aspect of the surveying method, the surveying system, and the surveying program according to one embodiment of the present disclosure.

As illustrated in FIG. 1, since a leveling string basically stretches out across two batter board beams 32 and 32 facing each other, a point M1 to which one end of the leveling string is to be fixed is determined on the top surface of one of the batter board beams 32, and the one end of the leveling string is fixed to the point M1 by nailing or any other suitable means. In order to accurately stretch out the leveling string, accurate determination of the position of the point M1 is necessary. The point on the batter board beam 32D is not illustrated in the drawings, which corresponds to the point M1 on the batter board beam 32A.

The point M1 to which the leveling string is to be fixed is defined on the top surface of the batter board beam 32. The position of the foundation of a building or any other suitable structure at which a leveling string is to be placed is predetermined and stored in the form of the design information 121. The position of the foundation of a building at which a leveling string is to be placed is predetermined and stored in the form of the design information 121, which would be updated, depending on a result of obtaining the relative position of the foundation point MP described above. The position of the foundation of the building is determined by reference sides ML connecting a plurality of foundation points MP, and is shown as the reference sides ML1 to ML4 in FIG. 1 (see also FIG. 6). In this embodiment, the reference sides ML1 to ML4 form a closed rectangular region. However, the reference sides ML1 to ML4 are mere line information according to the design information 121 and are formed by supporting both ends of a leveling string by batter board beams 32 and 32 at a site.

The terminal 100 is applicable to searching for a point at which an imaginary extension VL (e.g., the imaginary extension VL1, VL2) of a reference side ML and the top surface of a batter board beam 32 intersect with each other, using the surveying device 200 and the survey target device 300. For example, an operator moves the survey target device 300 in order to search for the point M1 via checking, on the display unit 150 of the terminal 100, how far the position indicated by the survey target device 300 is away from the imaginary extension VL2, and finds and determines the point without positional deviation as the point M1. After determining the point M1, the operator can set a fixing point of the leveling string by nailing or any other suitable means at the position.

In this manner, the surveying method according to this embodiment may be, for example, a surveying method of setting a batter board including a batter board stake, a batter board beam, and a leveling string, using the surveying system 1. The surveying method includes: performing benchmark measurement including measuring the position of a benchmark BM serving as a reference using a surveying device; performing imaginary extension calculation including calculating an imaginary extension VL which is an extension of a reference side ML indicating a point at which a leveling string is to be stretched out; and performing leveling string guide including displaying a distance between a surveyed point and the imaginary extension on a terminal. Accordingly, the position at which the leveling string is to be fixed can be determined more accurately and the leveling string can be stretched out accurately and efficiently.

As described above, in this embodiment, a surveying method and a surveying program using a surveying system 1 including a surveying device 200 and a terminal 100. The surveying method and the surveying program include: receiving, by the terminal 100. a result of selecting a survey target foundation point from among a plurality of consecutive foundation points MP; obtaining an intersection CP between a reference line ML10 and a boundary side DL set in advance, the reference line ML10 connecting the survey target foundation point and an adjacent foundation point adjacent to the survey target foundation point; and outputting. in association with the survey target foundation point, a relative positional relationship between the intersection CP and a position of a survey target device 300 surveyed by the surveying device 200 for the survey target foundation point. Since the intersection serving as the reference of the relative position is calculated out in response to selecting the survey target foundation point, an operator can easily and efficiently acquire the position at the site.

The embodiment of the present disclosure has been described above, but the aspects of the present disclosure are not limited to the embodiment.

For example, while the configuration using the surveying device 200 and the terminal 100 has been described in this embodiment, the surveying device 200 and the terminal 100 may be configured integrally or the functions of the surveying device 200 and the terminal 100 may be implemented by using three or more devices. The terminal 100 and the survey target device 300 may be configured integrally or individually.

The surveying device 200 and the survey target device 300 are configured as physically individual hardware but as being capable of fulfilling the function of surveying in cooperation with each other. Therefore, the survey target device 300 may be interpreted as a part of the configuration of the surveying device 200. For example, another example of the surveying device 200 is a surveying device using a global navigation satellite system (GNSS). In this case, a GNSS receiver can be used as a device with the functions of the surveying device 200 and the survey target device 300.

The relative position of a foundation point MP may be measured after setting a batter board 3. As an alternative, the relative position indicating a distance may be measured before or after stretching out a leveling string in setting a batter board 3.

A foundation point may be a reference point in a building, a structure, or any other suitable design object.

The terminal control unit 110 is not limited to displaying an obtained relative position of a survey target foundation point on the display unit 150 but may output the relative position by other means, for example, by other ouput means of the terminal 100 or transmitting information on the relative position to another device (e.g., the surveying device 200).

By displaying the foundation point identification information 121a1 and 122a1 assigned to the foundation points MP and the boundary point identification information 121a2 and 122a2 assigned to the boundary points DP on the display unit 150 a1 the time of selecting a survey target foundation point or performing the other operation, an operator can easily grasp the foundation point MP for which the operator is currently operating. On the other hand, the foundation point identification information 121a1 and 122a1 and the boundary point identification information 121a2 and 122a2 are not necessarily displayed on the display unit 150 at the time of selecting a survey target foundation point or performing the other operation, depending on the layout of a screen display, etc.

The identification information 121a on the foundation points MP and the boundary points DP included in the design information 121 may be assigned in advance before being acquired from an external device or equipment, or may be assigned after a user, such as an operator, has acquired the design information 121.

## Claims

1. A surveying method using a surveying system (1) including a surveying device (200) and a terminal (100), the surveying method **characterized by** comprising:
receiving (S103), by the terminal (100), a result of selecting a survey target foundation point (MP_{H2}) from among a plurality of consecutive foundation points (MP);
obtaining (S105) an intersection (CP, CP1, CP2) between a reference line (ML10, ML11, ML12) and a boundary side (DL, DL1, DL3) set in advance, the reference line (ML10, ML11, ML12) connecting the survey target foundation point (MP_{H2}) and an adjacent foundation point (MP_{H1}, MP_{H3}) adjacent to the survey target foundation point (MP_{H2}); and
outputting (S107), in association with the survey target foundation point (MP_{H2}), a relative positional relationship between the intersection (CP, CP1, CP2) and a position of a survey target device (300) surveyed by the surveying device (200) for the survey target foundation point (MP_{H2}).

2. The surveying method of claim 1, wherein
the relative positional relationship is a distance from the intersection (CP, CP1, CP2) to the position of the survey target device (300).

3. The surveying method of claim 1 or 2, wherein
the reference line (ML10, ML11, ML12) includes a first reference line (ML11) and a second reference line (ML12), the first reference line (ML11) connecting the survey target foundation point (MP_{H2}) and a first adjacent foundation point (MP_{H1}), and the second reference line (ML12) connecting the survey target foundation point (MP₁₁₂) and a second adjacent foundation point (MP_{H3}), where the first adjacent foundation point (MP_{H1}) is one of adjacent foundation points adjacent to the survey target foundation point (MP_{H2}) and the second adjacent foundation point (MP_{H3}) is the other one of the adjacent foundation points adjacent to the survey target foundation point (MP_{H2}), and
the intersection (CP, CP1, CP2) includes a first intersection (CP1) between the first reference line (ML11) and the boundary side (DL), and a second intersection (CP2) between the second reference line (ML12) and the boundary side (DL).

4. The surveying method of any one of claims 1 to 3, wherein
the boundary side (DL) is set in advance by surveying by the surveying device (200).

5. The surveying method of any one of claims 1 to 4, wherein
foundation point identification information (121a1) is assigned to the plurality of consecutive foundation points (MP) in a sequential order, and
the survey target foundation point (MP_{H2}) is selected by an instruction to select the foundation point identification information (121a1) associated with the survey target foundation point (MP_{H2}).

6. The surveying method of claim 5, wherein
the foundation point (MP) according to the foundation point identification information (121a1) assigned sequentially to the foundation point identification information (121a1) on the survey target foundation point (MP_{H2}) is determined as the adjacent foundation point (MP_{H1}, MP_{H3}).

7. The surveying method of any one of claims 1 to 6, wherein
the terminal (100) displays a distance from the intersection (CP, CP1, CP2) to the position of the survey target device (300) and a deviation indicating the position of the survey target device (300) with respect to the reference line (ML10, ML11, ML12).

8. The surveying method of any one of claims 1 to 7, wherein
the boundary side (DL) is obtained by connecting a plurality of boundary points (DP) to which boundary point identification information is assigned in a sequential order.

9. The surveying method of any one of claims 1 to 8, wherein
the survey target foundation point (MP_{H2}) is one selected from the plurality of consecutive foundation points (MP).

10. A surveying system (1), **characterized by** comprising a surveying device (200) and a terminal (100),
the terminal (100) including:
an input unit (140) configured to receive a result of selecting a survey target foundation point (MP_{H2}) from among a plurality of consecutive foundation points (MP);
a control unit (110) configured to obtain an intersection (CP, CP1, CP2) between a reference line (ML10, ML11, ML12) and a boundary side (DL) set in advance, the reference line (ML10, ML11, ML12) connecting the survey target foundation point (MP_{H2}) and an adjacent foundation point (MP_{H1}, MP_{H3}) adjacent to the survey target foundation point (MP_{H2}); and
a display unit (150) configured to output, in association with the survey target foundation point (MP_{H2}), a relative positional relationship between the intersection (CP, CP1, CP2) and a position of a survey target device (300) surveyed by the surveying device (200) for the survey target foundation point (MP_{H2}).

11. A surveying program, **characterized by** using a surveying system (1) including a surveying device (200) and a terminal (100), the surveying program causing a computer to execute:
receiving (S103), by the terminal (100), a result of selecting a survey target foundation point (MP_{H2}) from among a plurality of consecutive foundation points (MP);
obtaining (S105) an intersection (CP, CP1, CP2) between a reference line (ML10, ML11, ML12) and a boundary side (DL) set in advance, the reference line (ML10, ML11, ML12) connecting the survey target foundation point (MP_{H2}) and an adjacent foundation point (MP_{H1}, MP_{H3}) adjacent to the survey target foundation point (MP_{H2}); and
outputting (S107), in association with the survey target foundation point (MP_{H2}), a relative positional relationship between the intersection (CP, CP1, CP2) and a position of a survey target device (300) surveyed by the surveying device (200) for the survey target foundation point (MP_{H2}).
